(19) Europäisches Patentamt
European Patent Office
Office européen des brevets

(11) **EP 4 031 427 B1**

(12) **FASCICULE DE BREVET EUROPEEN**

(45) Date de publication et mention de la délivrance du brevet:
**24.01.2024 Bulletin 2024/04**

(21) Numéro de dépôt: **20764394.1**

(22) Date de dépôt: **03.09.2020**

(51) Classification Internationale des Brevets (IPC):
**B60W 30/12** *(2020.01)*     **B60W 30/045** *(2012.01)*
**B60W 50/00** *(2006.01)*

(52) Classification Coopérative des Brevets (CPC):
**B60W 30/12; B60W 30/045;** B60W 2050/0008;
B60W 2050/0012; B60W 2050/0014;
B60W 2050/0018; B60W 2050/0075;
B60W 2050/0082; B60W 2050/0083;
B60W 2710/207

(86) Numéro de dépôt international:
**PCT/EP2020/074610**

(87) Numéro de publication internationale:
**WO 2021/052771 (25.03.2021 Gazette 2021/12)**

(54) **PROCÉDÉ DE RÉGULATION DE LA POSITION LATÉRALE D'UN VÉHICULE AUTOMOBILE**

VERFAHREN ZUM STEUERN DER SEITLICHEN POSITION EINES KRAFTFAHRZEUGES

METHOD FOR CONTROLLING THE LATERAL POSITION OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.09.2019 FR 1910267**

(43) Date de publication de la demande:
**27.07.2022 Bulletin 2022/30**

(73) Titulaires:
• **Renault S.A.S.**
**92100 Boulogne-Billancourt (FR)**
• **NISSAN MOTOR Co., Ltd.**
**Yokohama-shi, Kanagawa 221-0023 (JP)**

(72) Inventeurs:
• **KVIESKA, Pedro**
**78000 Versailles (FR)**
• **MUSTAKI, Simon**
**75004 PARIS (FR)**
• **QUILLIARD, Raphael**
**91300 Massy (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
• **KOSECKA J ET AL: "A comparative study of vision-based lateral control strategies for autonomous highway driving", PROCEEDINGS / 1998 IEEE INTERNATIONAL CONFERENCE ON ROBOTICS AND AUTOMATION, MAY 16 - 20, 1998, KATHOLIEKE UNIVERSITEIT LEUVEN, LEUVEN, BELGIUM, IEEE, NEW YORK, NY, USA, vol. 3, 16 mai 1998 (1998-05-16), pages 1903-1908, XP010281521, DOI: 10.1109/ROBOT.1998.680590 ISBN: 978-0-7803-4300-9**
• **KAMAT SHIVARAM: "Lane Keeping of Vehicle Using Model Predictive Control", 2019 IEEE 5TH INTERNATIONAL CONFERENCE FOR CONVERGENCE IN TECHNOLOGY (I2CT), IEEE, 29 mars 2019 (2019-03-29), pages 1-6, XP033739638, DOI: 10.1109/I2CT45611.2019.9033958**

- AMER NOOR HAFIZAH ET AL: "Modelling and Control Strategies in Path Tracking Control for Autonomous Ground Vehicles: A Review of State of the Art and Challenges", JOURNAL OF INTELLIGENT AND ROBOTIC SYSTEMS, KLUWER DORDRECHT, NL, vol. 86, no. 2, 22 novembre 2016 (2016-11-22), pages 225-254, XP036201731, ISSN: 0921-0296, DOI: 10.1007/S10846-016-0442-0 [extrait le 2016-11-22]

- AMER NOOR HAFIZAH ET AL: "Modelling and Control Strategies in Path Tracking Control for Autonomous Ground Vehicles:

## Description

### Domaine Technique de l'invention

L'invention concerne un procédé de régulation de la position latérale d'un véhicule automobile, notamment d'un véhicule équipé d'un système d'aide à la conduite. L'invention porte aussi sur un véhicule automobile comprenant des moyens matériels et/ou logiciels mettant en oeuvre un tel procédé. L'invention porte enfin sur un procédé de calibration d'un tel véhicule.

### Etat de la technique antérieure

Un véhicule équipé d'un système d'aide à la conduite comporte généralement un système de direction asservi à un calculateur. Le système de direction contrôle l'orientation des roues directrices du véhicule de sorte que le véhicule suive une trajectoire donnée. Le calculateur met en oeuvre des procédés de régulation permettant de positionner latéralement le véhicule sur une voie de circulation. Notamment, le calculateur peut mettre en oeuvre un procédé de régulation dénommé LCA (acronyme anglais signifiant "Lane Centering Assist") permettant de maintenir un véhicule au centre de sa voie de circulation.

De tels procédés de régulation doivent permettre de diriger un véhicule en douceur et sans à-coup le long d'une trajectoire donnée. De tels procédés sont par exemple divulgués dans les acrticles "A Comparative Study of Vision-Based Lateral Control Stratégies for Autonomous Highway Driving" (voir: https:// www.cis.upenn.edu/~cjtaylor/PUBLICATIONS/pdfs/TaylorlJRR99.pdf) ou "Lane Keeping of Vehicle Using Model Prédictive Control" (DOI: 10.1109/I2CT45611.2019.9033958).

Cependant, on constate que la qualité de la régulation effectuée par les véhicules connus de l'état de la technique se dégrade lorsque l'état du véhicule et/ou les conditions extérieures varient. Notamment, le chargement du véhicule, la position de son centre de gravité, l'état de ses pneus ou le type de pneus utilisés influent sur le comportement dynamique du véhicule, notamment lors de la prise d'un virage. Les consignes d'angle de braquage calculées lors de l'exécution du procédé de régulation peuvent conduire à une trajectoire nettement différente de la trajectoire prévue. Il s'en suit des mouvements de correction de la position latérale du véhicule. Ces mouvements de correction peuvent être notamment tardifs, voire insuffisants et créer un l'inconfort pour les passagers du véhicule. Des performances dégradées peuvent donc être ressenties si l'état du véhicule est modifié mais également si des conditions extérieures au véhicule varient, comme par exemple une modification de l'adhérence de la route et/ou une modification de la force ou de l'orientation du vent.

On connaît des procédés de calcul de consigne d'angle de braquage de roues directrices reposant sur l'utilisation de capteurs d'état du véhicule afin d'adapter une loi de commande. Toutefois, l'identification des facteurs perturbant le comportement dynamique d'un véhicule demeure complexe et délicate. De plus, de tels capteurs sont complexes à intégrer dans un véhicule. Ces procédés sont donc complexes à mettre en oeuvre et ne permettent pas de s'affranchir complètement des accélérations latérales subies par le véhicule.

### Présentation de l'invention

Le but de l'invention est de fournir un procédé de régulation de la position latérale d'un véhicule automobile remédiant aux inconvénients ci-dessus et améliorant les procédés de régulation connus de l'art antérieur.

Plus précisément, un premier objet de l'invention est un procédé de régulation de la position latérale d'un véhicule automobile qui soit plus indépendant de l'état du véhicule ou des conditions extérieures au véhicule.

Un second objet de l'invention est un procédé de régulation de la position latérale d'un véhicule automobile qui soit à la fois plus indépendant de l'état du véhicule et/ou des conditions extérieures au véhicule, et qui ne requiert pas l'utilisation de capteurs d'état du véhicule ou de capteurs de conditions extérieures au véhicule, ni même l'identification des facteurs modifiant le comportement dynamique du véhicule.

### Résumé de l'invention

L'invention se rapporte à un procédé de régulation de la position latérale d'un véhicule automobile, le procédé comprenant :

- une étape de calcul d'une distance de visée d'un moyen de détection embarqué dans le véhicule,
- une étape de calcul d'une première composante d'une consigne d'angle de braquage de roues directrices du véhicule, la première composante étant une composante en boucle ouverte d'un système de contrôle, la première composante étant pondérée par un gain, ledit gain étant une fonction décroissante de la distance de visée,

- une étape de calcul d'une deuxième composante de ladite consigne d'angle de braquage, la deuxième composante étant une composante en boucle fermée du système de contrôle.

Ledit gain peut être compris entre 0 et 1 inclus.

Ledit gain peut être une fonction linéaire décroissante de la distance de visée, et/ou ledit gain peut être égal à 1 lorsque la distance de visée est nulle.

Le procédé de régulation peut comprendre une étape de calcul de la consigne d'angle de braquage, la consigne d'angle de braquage étant égale à la somme de la composante en boucle ouverte et de la composante en boucle fermée.

L'étape de calcul de la deuxième composante peut comprendre une sous-étape de calcul d'un vecteur d'état du véhicule, le vecteur d'état comprenant une composante égale à un écart latéral du véhicule par rapport à une trajectoire de référence à la distance de visée.

L'étape de calcul de la deuxième composante de ladite consigne d'angle de braquage peut comprendre une sous-étape de multiplication de l'écart latéral du véhicule à la distance de visée par la distance de visée.

Le procédé de régulation peut comprendre :

- une étape de calcul d'une accélération latérale future du véhicule,
- une étape de comparaison de l'accélération latérale à un seuil, puis,
- si l'accélération latérale est supérieure ou égale au seuil, une étape de calcul de la première composante de ladite consigne d'angle de braquage, la première composante étant pondérée par un gain égal à un valeur prédéfinie, indépendante de la distance de visée, et
- si l'accélération latérale est strictement inférieure au seuil, une étape de calcul de la première composante de ladite consigne d'angle de braquage, la première composante étant pondérée par un gain, ledit gain étant une fonction décroissante de la distance de visée.

L'étape de calcul d'une accélération latérale future du véhicule peut comprendre une sous-étape d'acquisition d'une courbure d'une voie de circulation via un système de navigation.

L'étape de calcul de la distance de visée peut comprendre une sélection d'une valeur minimum entre une distance prédéfinie et une portée de vue du moyen de détection du véhicule.

L'invention se rapporte également à un Produit programme d'ordinateur comprenant des instructions de code de programme enregistrées sur un support lisible par une unité de commande électronique pour mettre en oeuvre les étapes du procédé de régulation tel que définit précédemment lorsque ledit programme fonctionne sur une unité de commande électronique.

L'invention se rapporte également à un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en oeuvre le procédé de régulation tel que défini précédemment.

L'invention se rapporte également à un support d'enregistrement de données, lisible par une unité de commande électronique, sur lequel est enregistré un programme d'ordinateur comprenant des instructions de code de programme de mise en oeuvre du procédé de régulation tel que défini précédemment.

L'invention se rapporte également à un support d'enregistrement lisible par ordinateur comprenant des instructions qui, lorsqu'elles sont exécutées par un ordinateur, conduisent celui-ci à mettre en oeuvre le procédé de régulation tel que défini précédemment.

L'invention se rapporte également à un signal d'un support de données, portant le produit programme d'ordinateur tel que défini précédemment.

L'invention se rapporte également à un système de direction comprenant des moyens matériels et/ou logiciels mettant en oeuvre le procédé de régulation tel que défini précédemment.

L'invention se rapporte également à un véhicule automobile comprenant un système de direction tel que défini précédemment.

L'invention se rapporte également à un procédé de calibration d'un véhicule tel que défini précédemment, le procédé de calibration comprenant :

- une première étape de mesure d'un écart latéral de référence du véhicule par rapport à une trajectoire de référence lorsque le véhicule effectue un premier parcours, la distance de visée étant définie comme égale à zéro,
- une deuxième étape d'augmentation graduelle de la distance de visée et de diminution du gain tant que l'écart latéral du véhicule par rapport à la trajectoire de référence est sensiblement égal à l'écart latéral de référence lorsque le véhicule effectue le premier parcours,

et/ou le procédé de calibration comprenant :

- une première étape de définition de la distance de visée comme égale à une distance prédéfinie,
- une deuxième étape d'augmentation graduelle du gain jusqu'à ce que l'écart latéral du véhicule par rapport à une trajectoire de référence soit inférieur ou égal à un seuil, lorsque le véhicule effectue un deuxième parcours.

**Présentation des figures**

Ces objets, caractéristiques et avantages de la présente invention seront exposés en détail dans la description suivante d'un mode de réalisation particulier fait à titre non-limitatif en relation avec les figures jointes parmi lesquelles :

La figure 1 est une vue schématique d'un véhicule automobile selon un mode de réalisation de l'invention.
La figure 2 est une première vue schématique de dessus du véhicule sur une voie de circulation.
La figure 3 est une deuxième vue schématique de dessus du véhicule sur une voie de circulation.
La figure 4 est un synoptique d'un procédé de régulation selon un mode de réalisation de l'invention.
La figure 5 est une vue schématique d'un régulateur mis en oeuvre dans le procédé de régulation.
La figure 6 est un graphique illustrant l'évolution d'un gain en boucle ouverte du régulateur en fonction de la distance de visée.

**Description détaillée**

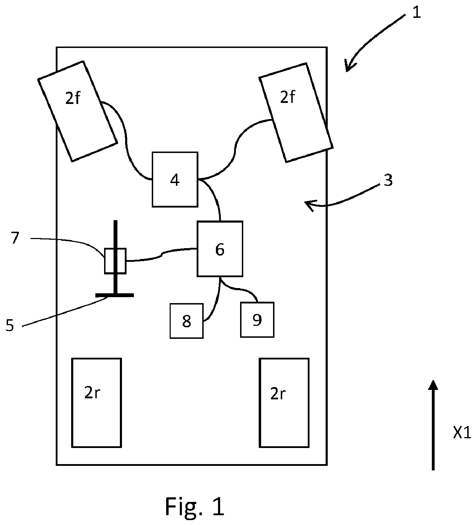

La figure 1 illustre schématiquement un véhicule 1 automobile selon un mode de réalisation de l'invention. Le véhicule 1 peut être de toute nature. Notamment, il peut être par exemple un véhicule particulier, un véhicule utilitaire, un camion ou un bus. Le véhicule 1 comprend deux roues avant 2f directrices et deux roues arrières 2r. L'orientation des roues directrices 2f peut être contrôlée par un système de direction 3. Le système de direction 3 comprend un dispositif de direction 4 en liaison mécanique avec les deux roues avant 2f et un volant 5 en liaison mécanique avec le dispositif de direction 4. Le système de direction 3 comprend en outre une unité de commande électronique 6 et un capteur d'angle au volant 7. Le capteur d'angle au volant 5 est apte à mesurer l'orientation du volant 7. Il peut notamment mesurer la position angulaire d'une colonne de direction reliée au volant 7. L'orientation du volant 7 est proportionnelle à l'orientation des roues directrices 2f, c'est-à-dire à l'angle de braquage des roues directrices 2f. Ainsi, une commande d'un angle de braquage des roues directrices dépend de la commande d'un angle au volant du véhicule 1. Par ailleurs, le véhicule 1 peut aussi être équipé d'autres capteurs tels qu'un capteur de lacet et/ou au moins un capteur de vitesse de roue permettant de déterminer la vitesse du véhicule.

L'unité de commande électronique 6 est reliée électriquement au capteur d'angle au volant 7, au dispositif de direction 4, et éventuellement à d'autres capteurs du véhicule et/ou à d'autres unités de commande électronique ou calculateurs du véhicule 1. Elle comprend notamment une mémoire, un microprocesseur et des interfaces d'entrée/sortie pour recevoir des données en provenance d'autres équipements du véhicule 1 ou pour émettre des données à l'attention d'autres équipements du véhicule 1. La mémoire de l'unité de commande électronique est un support d'enregistrement de données sur lequel est enregistré un programme d'ordinateur comprenant des instructions de code de programme de mise en oeuvre d'un procédé selon un mode de réalisation de l'invention. Le microprocesseur est apte à exécuter ce procédé. Notamment, l'unité de commande électronique 6 est apte à envoyer des ordres de commande au dispositif de direction 4 via son interface d'entrée/sortie de sorte à braquer, c'est-à-dire orienter, les roues directrices selon un angle calculé. On peut définir un axe longitudinal X1 du véhicule comme l'axe parallèle à la direction dans laquelle se dirige le véhicule en ligne droite.

Le véhicule 1 comprend aussi des moyens de détection 8 de l'environnement du véhicule 1, comme par exemple des radars, et/ou des lidars et/ou des caméras. Ces moyens de détection peuvent être des éléments du système de direction. Les moyens de détection 8 sont également reliés à l'unité de commande électronique 6. Le véhicule 1 est un véhicule équipé d'un système d'aide à la conduite.

Le véhicule 1 comprend enfin un système de navigation 9. Le système de navigation comprend notamment une base de données de routes empruntables par le véhicule. Le système de navigation est apte à calculer la courbure d'une route sur laquelle circule le véhicule ou d'une route sur laquelle le véhicule s'apprête à circuler. Le système de navigation est relié à l'unité de commande électronique 6 et la valeur de cette courbure peut lui être transmise.

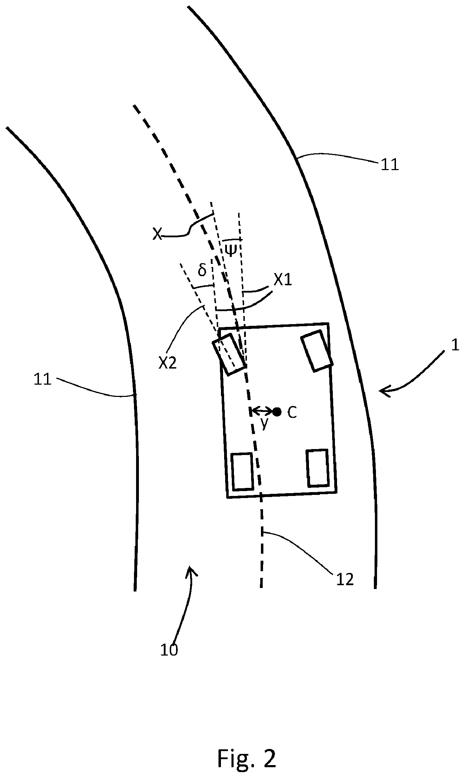

La figure 2 illustre le véhicule 1 circulant sur une voie de circulation 10. La voie de circulation 10 est délimitée à gauche et à droite par deux lignes de démarcation 11, matérialisées sur la voie de circulation par exemple sous la forme de lignes continues ou de lignes en pointillés, de couleur blanche ou jaune. Les moyens de détection 8 sont aptes à identifier les lignes de démarcation 11. L'unité de commande électronique comprend des moyens logiciels permettant de calculer une trajectoire de référence 12 ou trajectoire de consigne. La trajectoire de référence 12 est identifiée par une ligne en pointillés sur la figure 2. La trajectoire de référence 12 est une ligne théorique, non visible sur la voie de circulation 10. La trajectoire de référence 12 peut par exemple matérialiser le centre de la voie et correspondre par exemple à une ligne située à équidistance des deux lignes de démarcation 11. En variante, la trajectoire de référence 12 pourrait être définie différemment. Elle pourrait être décalée davantage vers l'une ou l'autre des deux lignes de démarcation 11. Elle pourrait également être calculée en fonction de la détection d'obstacles ou d'autres véhicules présents sur la voie de circulation ou sur des voies de circulation adjacentes à la voie de circulation 10.

Dans ce document on définit l'axe longitudinal X comme l'axe de la voie de circulation parallèle à la trajectoire de référence à hauteur du véhicule 1, par exemple à hauteur de son centre de gravité. L'axe transversal Y est l'axe de la voie de circulation perpendiculaire à la trajectoire de référence à hauteur du véhicule 1. L'axe Z désigne perpendiculaire à l'axe longitudinal X et à l'axe transversal Y. La voie de circulation illustrée sur la figure 2 est une voie de circulation en virage vers la gauche. Toutefois, l'invention peut aussi bien être mis en oeuvre lorsque la voie de circulation est en ligne droite ou en virage vers la droite.

L'état du véhicule, c'est-à-dire sa position sur la voie de circulation 10 et sa trajectoire, peut être caractérisé par un ensemble de grandeurs physiques, ou variables d'état, représentées en partie sur la figure 2. Notamment, l'état du véhicule peut être caractérisé par les grandeurs suivantes :

- une vitesse de lacet $d\psi/dt$ du véhicule, et/ou
- un angle de cap $\psi$ du véhicule, et/ou
- une vitesse latérale $dy/dt$ du véhicule, et/ou
- un écart latéral y du véhicule par rapport à une trajectoire de référence, et/ou
- une vitesse de braquage $d\delta/dt$ des roues directrices du véhicule, et/ou
- un angle de braquage $\delta$ des roues directrices du véhicule, et/ou
- une intégrale de l'écart latéral ly du véhicule par rapport à une trajectoire de référence.

La vitesse de lacet $d\psi/dt$ est la vitesse de rotation du véhicule autour de l'axe Z. La vitesse de lacet peut être mesurée par exemple au moyen d'un capteur de lacet. L'angle de cap $\psi$ peut être défini comme l'angle formé entre l'axe longitudinal X de la voie de circulation 10, c'est-à-dire l'axe tangent à la trajectoire de référence 12 à hauteur du véhicule, et l'axe longitudinal X1 du véhicule. L'écart latéral y peut être défini comme la distance séparant un point du véhicule (notamment son centre de gravité C) de la trajectoire de référence 12. En variante, l'écart latéral y pourrait également mesurer la distance séparant un point du véhicule d'une ligne de démarcation 11. L'angle de cap $\psi$ et l'écart latéral y peuvent être calculés par exemple grâce aux moyens de détection 8 du véhicule. La vitesse latérale $dy/dt$ est la dérivée par rapport au temps de l'écart latéral y. L'intégrale de l'écart latéral ly peut être calculée par rapport au temps et depuis un moment initial correspondant au moment de l'activation du procédé de régulation.

L'angle de braquage $\delta$ des roues directrices peut être défini comme l'angle formé entre l'axe X2 parallèle à la direction de roulement des roues avant directrices et l'axe longitudinal X1 du véhicule. L'angle de braquage $\delta$ est proportionnel à l'angle au volant mesuré par le capteur d'angle au volant 7. En remarque, lorsque le véhicule tourne, les deux roues directrices d'un véhicule sont en général braquées selon des angles légèrement différents afin de tenir compte des rayons de courbures différents suivis par chacune des roues directrices. Ces différences peuvent alors être considérées comme négligeables. Ainsi, l'état du véhicule peut être simplifié en utilisant un modèle dit "bicyclette", c'est-à-dire en considérant une unique roue directrice dont l'angle de braquage fait suivre au véhicule la même courbure que le feraient deux roues directrices avec des angles de braquage différents. L'angle de braquage des roues directrices en utilisant le modèle "bicyclette" peut être par exemple un angle moyen entre l'angle de braquage de la roue directrice gauche et l'angle de braquage de la roue directrice droite. La vitesse de braquage $d\delta/dt$ des roues directrices est la dérivée par rapport au temps de l'angle de braquage $\delta$.

On peut définir une distance de visée L comme la valeur minimum entre une distance prédéfinie Lmax et une portée de vue du moyen de détection du véhicule Lrange. La portée de vue du moyen de détection est la distance maximale pour laquelle le moyen de détection peut détecter l'environnement avec un bon niveau de confiance ou avec une netteté suffisante. La portée de vue dépend notamment de la sensibilité de capteurs embarqués dans le moyen de détection mais également des conditions de luminosité et/ou des conditions météorologiques ou atmosphériques. La portée de vue dépend aussi de la typologie de la voie de circulation empruntée et de l'éventuelle présence d'un obstacle ou d'autre véhicule devant le moyen de détection 8. En particulier, lorsque le véhicule aborde un virage, la portée de vue du moyen de détection 8 peut être réduite. La distance prédéfinie Lmax peut être une valeur définie par calibration du véhicule. Elle peut par exemple être définie à une valeur de 30 mètres.

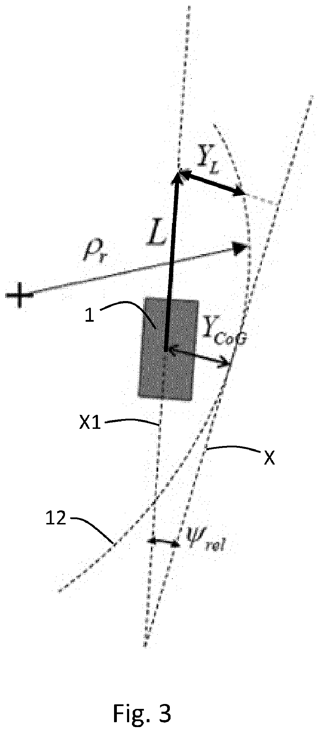

La distance de visée L est notamment représentée sur la figure 3. De manière imagée, la distance de visée peut être vue comme une « canne à pêche » accrochée sur le toit du véhicule. L'écart latéral yL à la distance de visée peut être défini comme la distance latérale séparant la trajectoire de référence 12 et l'extrémité de la « canne à pêche ». Autrement dit, l'écart latéral yL correspond à l'écart latéral entre la trajectoire de référence 12 et un point qui est à une distance de visée L devant le véhicule 1, selon la direction perpendiculaire à la tangente à la trajectoire de référence au niveau du véhicule.

L'écart latéral yL est mesuré par la caméra qui fournit en temps réel l'écart latéral, notamment au niveau du centre de gravité C du véhicule, sous forme d'un polynôme, ce qui permet de connaitre l'écart latéral à toute distance (dans la limite du champ de la caméra) et notamment à la distance L.

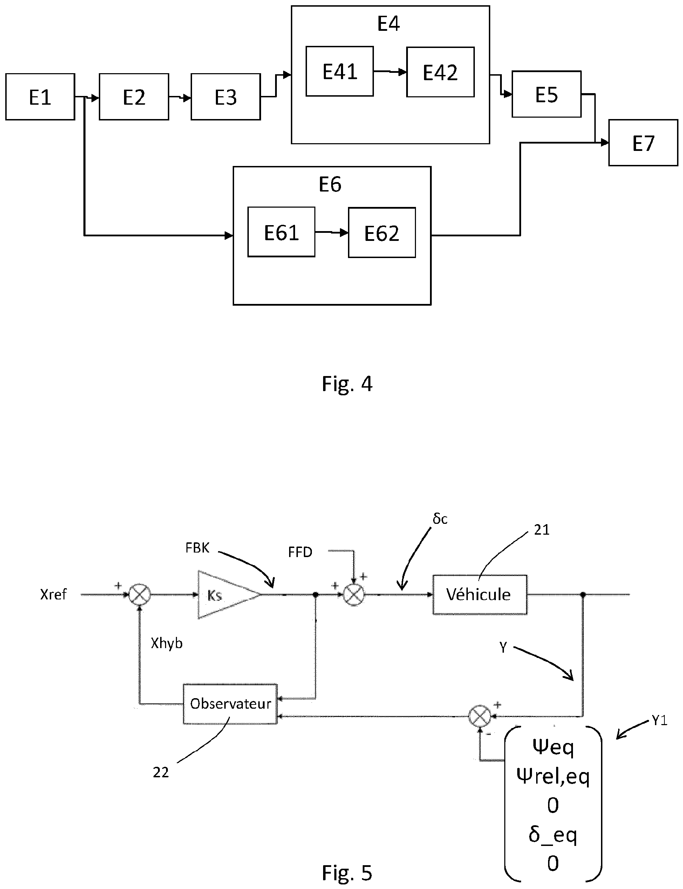

En référence à la figure 4, nous allons à présent décrire un procédé de régulation de la position latérale du véhicule 1 selon un mode de réalisation de l'invention. Le procédé peut être décomposé en sept étapes : E1 à E7. Ce procédé d'aide à la conduite peut être répété selon une fréquence donnée. Comme cela va être détaillé par la suite, le procédé de régulation repose sur un système de contrôle, également dénommé régulateur. Le système de contrôle comprend une première composante en boucle ouverte FFD (également dénommé "feedforward") et une deuxième composante en boucle fermée FBK (également dénommé "feedback"). Par nature, la boucle FFD est réactive alors que la boucle FBK est plus lente, ce qui permet d'améliorer le confort et de corriger les erreurs du modèle en boucle ouverte. Le consigne d'angle de braquage des roues directrices est obtenue par la somme de la première composante FFD et de la deuxième composante FBK. L'invention permet, en virage, de décharger la composante FFD tout en compensant par une adaptation de la composante FBK pour rendre la prise de virage plus robuste et améliorer le ressenti conducteur qui bénéficiera ainsi de plus de confort.

Dans une première étape E1, on calcule la trajectoire de référence 12. La trajectoire de référence est la trajectoire qui va être suivie par le véhicule. A cet effet, on peut par exemple détecter les lignes de démarcation 11 avec les moyens de détection 8 puis on peut calculer la trajectoire de référence 12 comme la ligne située à équidistance des deux lignes de démarcation 11. La trajectoire de référence peut être représentée par un vecteur d'état de référence Xref, utilisé en entrée du système de contrôle. Le vecteur d'état de référence Xref est donc calculé en fonction de la trajectoire de référence 12.

Dans une deuxième étape E2, on calcule l'accélération latérale future du véhicule, c'est-à-dire l'accélération latérale que va supporter le véhicule après un temps T0 qui peut, par exemple, être défini par calibration. Dans cette optique on peut tout d'abord déterminer la courbure de la voie de circulation 10 à l'avant du véhicule et combiner cette valeur avec la vitesse du véhicule, et éventuellement l'accélération du véhicule, pour estimer une accélération latérale lorsque le véhicule circulera au niveau de cette courbure. Par exemple l'accélération latérale aymax du véhicule peut être calculée avec la formule suivante :

$$ay_{max} = \rho(Lmax).v^2$$

Dans laquelle:

-    $\rho$(Lmax) désigne la courbure de la voie de circulation à une distance Lmax du véhicule.
-    v désigne la vitesse du véhicule

La courbure de la voie de circulation peut aussi être calculée à une distance fixe du véhicule. Elle peut être déterminée grâce aux moyens de détection si ceux-ci ont une portée de vue suffisante ou bien être obtenue via le système de navigation 9 embarqué. Dans cette dernière hypothèse, la courbure de la voie de circulation peut être envoyée du système de navigation à l'unité de commande électronique. L'utilisation de données issues du système de navigation permet de calculer la courbure de la voie de circulation même lorsque les moyens de détection ont une portée de vue insuffisante.

Dans une troisième étape E3, on compare l'accélération latérale à un seuil S1. Ce seuil S1 peut être par exemple égal à 0.2g ou 0.25g, mais en variante il pourrait être défini à une valeur différente, choisie après des essais sur véhicule. Cette comparaison permet de distinguer des situations de conduite ordinaire dans lesquelles les virages sont peu serrés et dans lesquels les accélérations latérales sont faibles, de situations de conduites dans lesquelles les virages sont plus serrés et où la portée de vue des moyens de détection est réduite.

Dans une quatrième étape E4, on calcule un gain G qui sera utile pour le calcul de la composante en boucle ouverte pour pondérer la contribution de la composante en boucle ouverte FFD. On peut distinguer deux cas selon que l'accélération latérale est supérieure ou égale au seuil S1 ou strictement inférieure au seuil S1.

Dans le cas où l'accélération latérale est strictement inférieure au seuil S1, le gain G est défini comme une fonction décroissante de la distance de visée L. C'est-à-dire que plus la distance de visée est importante, plus le gain G est faible et plus la contribution de la composante en boucle ouverte FFD dans le calcul de l'angle de consigne sera faible.

Le gain G peut être compris entre 0 et 1 inclus. La contribution de la composante en boucle ouverte est donc au plus égale à la valeur qu'elle aurait en l'absence de prise en compte du gain G. lorsque le gain G est strictement inférieur à 1, la contribution de la composante en boucle ouverte au calcul de la consigne d'angle de braquage est donc minorée.

Le gain G peut être égal à 1 lorsque la distance de visée est nulle. Ainsi, si la portée de vue du moyen de détection est nulle, alors la contribution de la composante en boucle ouverte n'est pas minorée.

De manière plus détaillée, et toujours dans le cas où l'accélération latérale est strictement inférieure au seuil S1, la quatrième étape E4 peut comprendre une première sous étape E41, dans laquelle on calcule la distance de visée L du moyen de détection embarqué dans le véhicule 1. Comme vu précédemment, la distance de visée L peut être calculée avec la formule suivante :

$$L = \min(Lmax, Lrange)$$

Dans laquelle :

- Lmax désigne une distance prédéfinie.
- Lrange désigne la portée de vue du moyen de détection du véhicule.

Ensuite, dans une deuxième sous étape E42, on peut calculer le gain G au moyen d'une fonction dépendante de la distance de visée. Le gain G peut notamment être calculé avec la formule suivante :

$$G = 1 - \frac{L}{L_{max}} * \beta$$

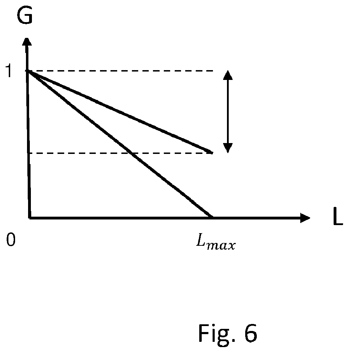

Dans laquelle $\beta$ désigne un paramètre qui peut être ajusté lors d'une phase de calibration du véhicule. Le paramètre $\beta$ peut être inférieur ou égal à 1 et strictement supérieur à 0. La figure 6 illustre deux fonctions de calcul du gain G données à titre d'exemple. Selon une première fonction F1, le gain G décroit linéairement de 1 (lorsque la distance de visée à nulle) jusqu'à 0 (lorsque la distance de visée est égale à la distance prédéfinie Lmax). Le paramètre $\beta$ de la première fonction F1 est donc égal à 1. La fonction F2 représente un deuxième exemple de calcul du gain G dans lequel le paramètre $\beta$ est strictement inférieur à 1.

Dans le cas où l'accélération latérale est supérieure ou égale au seuil S1, le gain G peut être fixé à une valeur prédéfinie $\gamma$, indépendante de la distance de visée.

Ensuite, dans une cinquième étape E5, on calcule la composante en boucle ouverte FFD de la consigne d'angle de braquage. Cette composante en boucle ouverte peut être sensiblement égale à l'angle de braquage des roues directrices nécessaire pour suivre la courbure de la route $\delta eq$, pondéré par le gain G calculé lors de la quatrième étape E4. Ainsi la composante en boucle ouverte peut être calculée avec la formule suivante:

$$FFD = G.\delta eq$$

L'angle de braquage des roues directrices nécessaire pour suivre la courbure de la route $\delta eq$, peut être calculé par la formule suivante :

$$\delta eq = \rho.v.\frac{a11.a32 - a12(a31 - v)}{a12.a36 - a16.a32}$$

Dans laquelle :

- $\rho$ désigne la courbure de la voie de circulation à hauteur du véhicule
- v désigne la vitesse du véhicule
- a11, a12, a16, a31, a32, a36 sont les composantes d'une matrice A qui sera définie ultérieurement, ces composantes étant fonction de caractéristiques intrinsèques du véhicule 1 et de sa vitesse.

Dans une sixième étape E6, on calcule la composante en boucle fermée FBK de la consigne d'angle de braquage. La composante en boucle fermée permet de corriger la composante en boucle ouverte pour suivre au mieux la trajectoire de référence quel que soit l'état du véhicule et / ou les conditions extérieures. La composante en boucle fermée est calculée au moyen d'un régulateur en boucle fermée. Ce régulateur est basé sur la représentation d'état du véhicule. La composante en boucle fermée vise à corriger tout le vecteur d'état de référence Xref et notamment à corriger l'angle de cap $\psi$, la dérivée de l'angle de cap d$\psi$/dt, et l'angle de braquage $\delta$ des roues de sorte à faire coïncider ces paramètres avec ceux du vecteur d'état de référence Xref.

La figure 5 représente un système de contrôle selon un mode de réalisation de l'invention. Le vecteur hybride Xhyb y est représenté en sortie de l'observateur pour simplifier la représentation, sachant que cette sortie n'est pas directe puisque l'on a choisi un vecteur hybride Xhyb qui est reconstruit pour ses deux états observés en reprenant la sortie directe de l'observateur pour ces deux états et en reprenant les valeurs mesurées des cinq autres états. Néanmoins, en variante, le vecteur Xhyb pourrait ne pas être hybride et ne contenir que des états observés, tel que représenté en figure 5.

Dans une première sous-étape E61 de la sixième étape E6, on calcule un vecteur d'état observé caractérisant la position et la trajectoire du véhicule sur la voie de circulation 11 et on reconstruit un vecteur d'état hybride Xhyb qui contient cinq mesures ($d\psi/dt$, $\psi$, yL, $\delta$ et -ly) et deux états observés (dy/dt et $d\delta/dt$) afin de reconstruire ces états dy/dt et $d\delta/dt$ qui ne sont pas connus par mesure. Le vecteur d'état de référence Xref du véhicule qui constitue la consigne est indépendant du vecteur d'état hybride à un instant donné. Le vecteur d'état hybride peut être défini de la manière suivante :

$$Xhyb = \begin{pmatrix} d\psi/dt \\ \psi \\ dy/dt \\ yL \\ d\delta/dt \\ \delta \\ -ly \end{pmatrix}$$

Le vecteur d'état hybride comprend donc sept composantes. D'une manière générale, le vecteur d'état peut caractériser la position, la vitesse et l'accélération subie par le véhicule à un instant donné. Le vecteur d'état hybride est donc un vecteur variable temporellement. Parmi les sept composantes du vecteur d'état hybride, les composantes $d\psi/dt$, $\psi$, dy/dt, $d\delta/dt$, $\delta$ et -ly caractérisent la position et la trajectoire du véhicule 1 à l'instant présent, c'est-à-dire l'instant au cours duquel est exécuté le procédé de régulation ou dans sa position réelle. Comme vu précédemment, la caractéristique yL correspond à l'écart latéral par rapport à la trajectoire de référence 12 d'un point qui est à une distance de visée L devant le véhicule, perpendiculairement à la tangente à la trajectoire au niveau du véhicule. En variante, les composantes du vecteur d'état pourraient être présentées dans un ordre différent. La description qui va suivre serait alors adaptée en conséquence.

Le vecteur d'état hybride Xhyb est reconstruit à partir du vecteur observé et des mesures, il est donc calculé à partir de capteurs embarqués dans le véhicule, d'un modèle cinématique du véhicule (identifié par 21 sur la figure 5) et d'un observateur (identifié par 22 sur la figure 5). Le modèle cinématique 21 peut être décrit par l'équation suivante :

$$dXhyb/dt = A.\,Xhyb + B1.\,\delta c + B2.\,\rho$$

Equation dans laquelle :

- dXhyb/dt est la dérivée par rapport au temps du vecteur d'état hybride Xhyb,
- $\delta c$ est la consigne d'angle de braquage des roues directrices calculée lors d'une précédente itération du procédé de régulation,
- $\rho$ est la courbure de la voie de circulation.
- A est une matrice 7x7 qui sera définie plus bas,
- B1 et B2 sont des vecteurs à sept composantes définis plus bas.

La matrice A peut être définie par la formule suivante :

$$A = \begin{pmatrix} -\dfrac{(c_f l_f^2 + c_r l_r^2)}{I_z v} & \dfrac{(c_f l_f - c_r l_r)}{I_z} & -\dfrac{(c_f l_f - c_r l_r)}{I_z v} & 0 & 0 & \dfrac{(c_f l_f)}{I_z} & 0 \\ 1 & 0 & 0 & 0 & 0 & 0 & 0 \\ \dfrac{(c_f l_f - c_r l_r)}{mv} & \dfrac{(c_f + c_r)}{m} & -\dfrac{(c_f + c_r)}{mv} & 0 & 0 & \dfrac{c_f}{m} & 0 \\ L & 0 & 1 & 0 & 0 & 0 & 0 \\ 0 & 0 & 0 & 0 & -2\zeta\omega & -2\omega^2 & 0 \\ 0 & 0 & 0 & 0 & 1 & 0 & 0 \\ 0 & 0 & 0 & -1 & 0 & 0 & 0 \end{pmatrix}$$

Dans laquelle :

- cf désigne la rigidité de dérive d'un train avant du véhicule,
- cr désigne la rigidité de dérive d'un train arrière du véhicule,
- lf désigne la distance entre le centre de gravité C du véhicule et le train avant,
- lr désigne la distance entre le centre de gravité C du véhicule et le train arrière,
- Iz désigne l'inertie du véhicule,
- m désigne la masse du véhicule,
- v désigne la vitesse du véhicule,
- $\zeta$ désigne un facteur d'amortissement du système de direction,
- $\omega$ désigne une fréquence propre d'un filtre du système de direction,
- L désigne la distance de visée.

Les paramètres $c_f$, $c_r$, lf, $l_r$, $I_z$, m, $\zeta$ et $\omega$ sont donc des constantes caractérisant le véhicule. Ils peuvent être définis une fois pour toutes lors de la mise au point du véhicule et être mémorisés dans la mémoire de l'unité de commande électronique.

En définissant par "aij", la composante de la ligne i et de la colonne j de la matrice A, on définit les paramètres a11, a12, a16, a31, a32, a36 utiles pour le calcul de l'angle de braquage $\delta$eq intervenant dans le calcul de la composante en boucle ouverte FFD. En particulier, on a :

$$a11 = \frac{\left(c_f l_f^2 + c_r l_r^2\right)}{I_z v}$$

$$a12 = \frac{\left(c_f l_f - c_r l_r\right)}{I_z}$$

$$a16 = \frac{\left(c_f l_f\right)}{I_z}$$

$$a31 = \frac{\left(c_f l_f - c_r l_r\right)}{mv}$$

$$a32 = \frac{\left(c_f + c_r\right)}{m}$$

$$a36 = \frac{c_f}{m}$$

On multiplie la matrice A par le vecteur d'état Xhyb. L'intégration de la distance de visée L dans la matrice A permet de compenser la minoration de la composante en boucle ouverte FFD due à sa multiplication par le gain G. Ainsi, avantageusement, plus la distance de visée est importante, plus le poids de la composante en boucle ouverte est faible et plus le poids de la composante en boucle fermée FBK est important. En variante, la distance de visée L pourrait être intégrée de toute autre manière dans le calcul de la composante en boucle fermée.

Le vecteur B1 peut être défini par la formule suivante :

$$B1 = \begin{pmatrix} 0 \\ 0 \\ 0 \\ 0 \\ \omega^2 \\ 0 \\ 0 \end{pmatrix}$$

Dans laquelle $\omega$ désigne la fréquence propre d'un filtre du système de direction.

Le vecteur B2 peut être défini par la formule suivante :

$$B2 = \begin{pmatrix} 0 \\ -v \\ -v^2 \\ -L.v \\ 0 \\ 0 \\ 0 \end{pmatrix}$$

Dans laquelle :

- v désigne la vitesse du véhicule.
- L désigne la distance de visée.

Par ailleurs, on peut définir un vecteur de mesure Y par la formule suivante:

$$Y = C.Xhyb$$

Dans laquelle C désigne une matrice diagonale permettant d'isoler les variables d'état composant le vecteur hybride Xhyb qui sont accessibles directement grâce à des capteurs embarqués dans le véhicule 1. La matrice C est donc une matrice qui dépend des mesures accessibles sur le véhicule. Le vecteur Y peut alors être défini par la formule suivante :

$$Y = \begin{pmatrix} d\psi/dt \\ \psi \\ yL \\ \delta \\ -Iy \end{pmatrix}$$

Sur la base du modèle cinématique 21 présenté ci-dessus, de l'observateur 22 et du vecteur Y, on peut calculer le vecteur d'état Xhyb. L'observateur 22 permet d'estimer les composantes non mesurées du vecteur d'état hybride. L'observateur 22 peut utiliser en entrée d'une part la composante en boucle fermée FBK calculée lors d'une précédente itération du procédé, et d'autre part le vecteur Y. Lorsqu'on part du principe que le véhicule est sur une ligne droite, on utilise un vecteur d'état de référence Xref égal à zéro. L'angle de braquage des roues directrices nécessaire pour suivre un virage est fourni par la composante en boucle ouverte FFD. Par ailleurs il faut également corriger la mesure pour « extraire » la partie virage du vecteur d'état Xhyb. Pour ce faire un vecteur Y1 défini par la formule ci-dessous peut être soustrait au vecteur Y.

$$Y1 = \begin{pmatrix} d\psi/dt \\ \psi \\ 0 \\ \delta \\ 0 \end{pmatrix}$$

Dans une deuxième sous-étape E62 de la sixième étape E6, on calcule la composante en boucle fermée FBK sur la base d'une comparaison entre le vecteur d'état de référence Xref du véhicule et le vecteur d'état hybride Xhyb. On calcule tout d'abord la différence entre le vecteur d'état de référence Xref et le vecteur d'état hybride Xhyb. On obtient ainsi un vecteur

Xerr représentant l'erreur entre l'état théorique du véhicule et son état réel. Le vecteur Xerr peut donc être défini par la formule suivante :

$$Xerr = Xref - Xhyb$$

Le vecteur Xerr est ensuite multiplié par un vecteur de régulation Ks, dépendant de la vitesse v du véhicule. On obtient ainsi la composante en boucle fermée par le calcul suivant :

$$FBK = Ks.Xerr$$

En remarque, le vecteur Ks est défini en fonction de la vitesse du véhicule. La mémoire de l'unité de contrôle électronique peut donc contenir différentes valeurs du vecteur Ks définies pour des valeurs de vitesse prédéfinies. Lorsque le véhicule circule effectivement à une vitesse intermédiaire entre deux valeurs de vitesse prédéfinies, le vecteur Ks peut être interpolé grâce à une pondération des vecteurs Ks mémorisés pour une vitesse supérieure et une vitesse inférieure à la vitesse réelle du véhicule.

Dans une septième étape E7, on calcule la consigne d'angle de braquage δc des roues directrices en additionnant la composante en boucle ouverte FFD et la composante en boucle fermée FBK. La consigne d'angle de braquage δc peut donc être calculée à l'aide de la formule suivante :

$$\delta c = FBK + FFD$$

La consigne d'angle de braquage δc est ensuite envoyée vers le dispositif de direction 4 qui oriente les roues directrices selon la consigne d'angle de braquage δc. Cette consigne δc est également utilisée pour le calcul du vecteur d'état hybride Xhyb lors d'une itération suivante du procédé de régulation.

En remarque, le procédé de régulation qui vient d'être décrit pourrait aussi bien être transposé à un procédé de calcul d'un angle de braquage des roues directrices puisque c'est l'orientation des roues directrices du véhicule qui permet d'ajuster la position latérale du véhicule. De même, le procédé pourrait également être transposé à un procédé de calcul d'un angle au volant puisque l'angle au volant et l'angle de braquage des roues directrices sont liés l'un à l'autre par un lien de proportionnalité. Le procédé de régulation pourrait également être appliqué à toute grandeur corrélée par une fonction connue à la position latérale du véhicule.

Grâce à l'invention on obtient un calcul d'angle de la consigne d'angle de braquage des roues directrices qui est plus indépendant des facteurs pouvant perturber le comportement dynamique du véhicule. Le procédé selon l'invention ne requiert pas l'identification préalable de ces facteurs.

L'invention concerne également un procédé de calibration du procédé de régulation de la position latérale du véhicule. Pour la calibration ou autrement dit le paramétrage du procédé de régulation, des essais sur pistes peuvent être effectués. La calibration du procédé de régulation vise notamment à déterminer une valeur pour les paramètres β et γ définis précédemment.

Dans une première étape C1 du procédé de calibration, on effectue des essais sur un premier parcours, dans lequel le véhicule subira des accélérations latérales strictement inférieures au seuil S1. La première étape C1 comprend une première sous-étape C11 de mesure de l'écart latéral du véhicule par rapport à la trajectoire de référence 12 lorsque le véhicule effectue le premier parcours, la distance de visée étant définie comme égale à zéro. On obtient ainsi un écart latéral de référence yref.

Dans une deuxième sous-étape C12, on réalise à nouveau le premier parcours et on augmente graduellement la distance de visée avec la diminution du gain G. Cette deuxième étape C12 est répétée tant que l'écart latéral y du véhicule par rapport à la trajectoire de référence est sensiblement égal à l'écart latéral de référence yref. Par sensiblement égal, on peut comprendre que la différence entre l'écart latéral y et l'écart latéral de référence yref est inférieure à un seuil. On peut ainsi construire une caractéristique de la distance de visée en fonction du gain G. En fonction de cette caractéristique, on peut définir le paramètre β qui permet d'approcher au mieux cette caractéristique.

Dans une deuxième étape C2 du procédé de calibration, on effectue des essais sur un deuxième parcours, dans lequel le véhicule subira des accélérations latérales supérieure ou égale au seuil S1. La deuxième étape C2 comprend une première sous-étape C21 de définition de la distance de visée L du véhicule. La distance de visée L est alors définie comme égale à la distance prédéfinie Lmax.

Dans une deuxième sous-étape C22, on réalise successivement le deuxième parcours tout en augmentant graduellement le gain G. La deuxième sous-étape C22 est répétée jusqu'à ce que l'écart latéral du véhicule par rapport à la trajectoire de référence soit inférieur ou égal à un seuil, par exemple un seuil de 30 centimètres. La valeur du gain G permettant d'obtenir un écart latéral par rapport à la trajectoire de référence inférieur à ce seuil peut être défini comme la valeur de gain γ.

Finalement, grâce à des essais sur circuit, on parvient à trouver un compromis idéal pour contrôler la position latérale du véhicule sur une voie de circulation. D'une part, le véhicule suit la trajectoire de référence sans s'en écarter de manière trop importante. Notamment le véhicule ne coupe pas les virages de manière trop importante. D'autre part, le véhicule est contrôlé sans à-coup ou mouvement brusque désagréable pour les passagers.

L'application de cette invention convient également à un véhicule quatre roues directrices, il suffirait d'utiliser un modèle bicyclette adapté.

## Revendications

1. Procédé de régulation de la position latérale d'un véhicule (1) automobile, comprenant:

   - une étape (E41) de calcul d'une distance de visée (L) d'un moyen de détection (8) embarqué dans le véhicule (1),
   - une étape (E5) de calcul d'une première composante (FFD) d'une consigne d'angle de braquage (δc) de roues directrices (2f) du véhicule (1), la première composante (FFD) étant une composante en boucle ouverte d'un système de contrôle, la première composante (FFD) étant pondérée par un gain (G), ledit gain (G) étant une fonction décroissante de la distance de visée (L),
   - une étape (E6) de calcul d'une deuxième composante (FBK) de ladite consigne d'angle de braquage (δc), la deuxième composante (FBK) étant une composante en boucle fermée du système de contrôle.

2. Procédé de régulation selon la revendication précédente, **caractérisé en ce que** ledit gain (G) est compris entre 0 et 1 inclus.

3. Procédé de régulation selon l'une des revendications précédentes, **caractérisé en ce que** ledit gain (G) est une fonction linéaire décroissante de la distance de visée (L), et/ou **caractérisé en ce que** ledit gain (G) est égal à 1 lorsque la distance de visée est nulle.

4. Procédé de régulation selon l'une des revendications précédentes, **caractérisé en ce qu'**il comprend une étape (E7) de calcul de la consigne d'angle de braquage (δc), la consigne d'angle de braquage (δc) étant égale à la somme de la composante en boucle ouverte (FFD) et de la composante en boucle fermée (FBK).

5. Procédé de régulation selon l'une des revendications précédentes, **caractérisé en ce que** l'étape (E6) de calcul de la deuxième composante (FBK) comprend une sous-étape (E61) de calcul d'un vecteur d'état (Xhyb) du véhicule (1), le vecteur d'état (Xhyb) comprenant une composante égale à un écart latéral (yL) du véhicule (1) par rapport à une trajectoire de référence (12) à la distance de visée (L).

6. Procédé de régulation selon la revendication précédente, **caractérisé en ce que** l'étape (E6) de calcul de la deuxième composante (FBK) de ladite consigne d'angle de braquage (δc) comprend une sous-étape de multiplication de l'écart latéral (yL) du véhicule (1) à la distance de visée (L) par la distance de visée (L).

**7.** Procédé de régulation selon l'une des revendications précédentes, **caractérisé en ce qu'**il comprend :

- une étape (E2) de calcul d'une accélération latérale future du véhicule (1),
- une étape (E3) de comparaison de l'accélération latérale à un seuil (S1), puis,
- si l'accélération latérale est supérieure ou égale au seuil (S1), une étape (E5) de calcul de la première composante (FFD) de ladite consigne d'angle de braquage ($\delta c$), la première composante (FFD) étant pondérée par un gain (G) égal à un valeur prédéfinie ($\gamma$), indépendante de la distance de visée (L), et
- si l'accélération latérale est strictement inférieure au seuil (S1), une étape de calcul de la première composante (FFD) de ladite consigne d'angle de braquage ($\delta c$), la première composante étant pondérée par un gain (G), ledit gain (G) étant une fonction décroissante de la distance de visée (L).

**8.** Procédé de régulation selon la revendication précédente, **caractérisé en ce que** l'étape (E2) de calcul d'une accélération latérale future du véhicule comprend une sous-étape d'acquisition d'une courbure d'une voie de circulation via un système de navigation.

**9.** Procédé de régulation selon l'une des revendications précédentes, **caractérisé en ce que** l'étape (E41) de calcul de la distance de visée (L) comprend une sélection d'une valeur minimum entre une distance prédéfinie (Lmax) et une portée de vue (Lrange) du moyen de détection (8) du véhicule (1).

**10.** Produit programme d'ordinateur comprenant des instructions de code de programme enregistrées sur un support lisible par une unité de commande électronique (6) pour mettre en oeuvre les étapes du procédé de régulation selon l'une quelconque des revendications 1 à 9 lorsque ledit programme fonctionne sur une unité de commande électronique (6).

**11.** Support d'enregistrement de données, lisible par une unité de commande électronique (6), sur lequel est enregistré un programme d'ordinateur comprenant des instructions de code de programme de mise en oeuvre du procédé de régulation selon l'une des revendications 1 à 9.

**12.** Système de direction (3), **caractérisé en ce qu'**il comprend des moyens matériels (5,8) et/ou logiciels mettant en oeuvre le procédé de régulation selon l'une des revendications 1 à 9.

**13.** Véhicule (1) automobile, **caractérisé en ce qu'**il comprend un système de direction selon la revendication précédente.

**14.** Procédé de calibration d'un véhicule (1) selon la revendication précédente, **caractérisé en ce qu'**il comprend :

- une première étape (C11) de mesure d'un écart latéral de référence (yref) du véhicule (1) par rapport à une trajectoire de référence (12) lorsque le véhicule (1) effectue un premier parcours, la distance de visée (L) étant définie comme égale à zéro,
- une deuxième étape (C12) d'augmentation graduelle de la distance de visée (L) et de diminution du gain (G) tant que l'écart latéral (y) du véhicule par rapport à la trajectoire de référence (12) est sensiblement égal à l'écart latéral de référence (yref) lorsque le véhicule effectue le premier parcours ,

et/ou **caractérisé en ce qu'**il comprend :

- une première étape (C21) de définition de la distance de visée (L) comme égale à une distance prédéfinie (Lmax),
- une deuxième étape (C22) d'augmentation graduelle du gain (G) jusqu'à ce que l'écart latéral (y) du véhicule par rapport à une trajectoire de référence (12) soit inférieur ou égal à un seuil, lorsque le véhicule effectue un deuxième parcours.

**Patentansprüche**

**1.** Verfahren zum Regeln der seitlichen Position eines Kraftfahrzeugs (1), beinhaltend:

- einen Schritt (E41) des Berechnens einer Sichtweite (L) eines Erfassungsmittels (8), das in das Fahrzeug (1) eingebaut ist,

- einen Schritt (E5) des Berechnens einer ersten Komponente (FFD) eines Lenkwinkelsollwerts (5c) von gelenkten Rädern (2f) des Fahrzeugs (1), wobei die erste Komponente (FFD) eine Feedforward-Komponente eines Steuerungssystems ist, wobei die erste Komponente (FFD) durch einen Verstärkungsfaktor (G) gewichtet wird, wobei der Verstärkungsfaktor (G) eine abnehmende Funktion der Sichtweite (L) ist,
- einen Schritt (E6) des Berechnens einer zweiten Komponente (FBK) des Lenkwinkelsollwerts (5c), wobei die zweite Komponente (FBK) eine Feedback-Komponente des Steuerungssystems ist.

2. Regelungsverfahren nach dem vorhergehenden Anspruch, **dadurch gekennzeichnet, dass** der Verstärkungsfaktor (G) zwischen 0 und 1 einschließlich liegt.

3. Regelungsverfahren nach einem der vorhergehenden Ansprüche, **dadurch gekennzeichnet, dass** der Verstärkungsfaktor (G) eine abnehmende lineare Funktion der Sichtweite (L) ist, und/oder **dadurch gekennzeichnet, dass** der Verstärkungsfaktor (G) gleich 1 ist, wenn die Sichtweite Null ist.

4. Regelungsverfahren nach einem der vorhergehenden Ansprüche, **dadurch gekennzeichnet, dass** es einen Schritt (E7) des Berechnens des Lenkwinkelsollwerts (5c) beinhaltet, wobei der Lenkwinkelsollwert (5c) gleich der Summe aus der Feedforward-Komponente (FFD) und der Feedback-Komponente (FBK) ist.

5. Regelungsverfahren nach einem der vorhergehenden Ansprüche, **dadurch gekennzeichnet, dass** der Schritt (E6) des Berechnens der zweiten Komponente (FBK) einen Unterschritt (E61) des Berechnens eines Zustandsvektors (Xhyb) des Fahrzeugs (1) beinhaltet, wobei der Zustandsvektor (Xhyb) eine Komponente beinhaltet, die gleich einer seitlichen Abweichung (yL) des Fahrzeugs (1) mit Bezug auf eine Referenzbahn (12) bei der Sichtweite (L) ist.

6. Regelungsverfahren nach dem vorhergehenden Anspruch, **dadurch gekennzeichnet, dass** der Schritt (E6) des Berechnens der zweiten Komponente (FBK) des Lenkwinkelsollwerts (5c) einen Unterschritt des Multiplizierens der seitlichen Abweichung (yL) des Fahrzeugs (1) bei der Sichtweite (L) mit der Sichtweite (L) beinhaltet.

7. Regelungsverfahren nach einem der vorhergehenden Ansprüche, **dadurch gekennzeichnet, dass** es Folgendes beinhaltet:

   - einen Schritt (E2) des Berechnens einer zukünftigen seitlichen Beschleunigung des Fahrzeugs (1),
   - einen Schritt (E3) des Vergleichens der seitlichen Beschleunigung mit einem Schwellenwert (S1), dann,
   - wenn die seitliche Beschleunigung größer als oder gleich dem Schwellenwert (S1) ist, einen Schritt (E5) des Berechnens der ersten Komponente (FFD) des Lenkwinkelsollwerts (5c), wobei die erste Komponente (FFD) durch einen Verstärkungsfaktor (G) gewichtet wird, der gleich einem vordefinierten Wert (γ) ist, der von der Sichtweite (L) unabhängig ist, und
   - wenn die seitliche Beschleunigung strikt kleiner als der Schwellenwert (S1) ist, einen Schritt des Berechnens der ersten Komponente (FFD) des Lenkwinkelsollwerts (5c), wobei die erste Komponente (FFD) durch einen Verstärkungsfaktor (G) gewichtet wird, wobei der Verstärkungsfaktor (G) eine abnehmende Funktion der Sichtweite (L) ist.

8. Regelungsverfahren nach dem vorhergehenden Anspruch, **dadurch gekennzeichnet, dass** der Schritt (E2) des Berechnens einer zukünftigen seitlichen Beschleunigung des Fahrzeugs einen Unterschritt des Erfassens einer Krümmung einer Fahrspur mittels eines Navigationssystems beinhaltet.

9. Regelungsverfahren nach einem der vorhergehenden Ansprüche, **dadurch gekennzeichnet, dass** der Schritt (E41) des Berechnens der Sichtweite (L) das Auswählen eines kleinsten Werts aus einer vordefinierten Entfernung (Lmax) und einer Sicht (Lrange) des Erfassungsmittels (8) des Fahrzeugs (1) beinhaltet.

10. Computerprogrammprodukt, das Programmcodeanweisungen beinhaltet, die auf einem durch eine elektronische Steuereinheit (6) lesbaren Träger gespeichert sind, um die Schritte des Regelungsverfahrens nach einem beliebigen der Ansprüche 1 bis 9 umzusetzen, wenn das Programm auf einer elektronischen Steuereinheit (6) ausgeführt wird.

11. Datenspeicherträger, der durch eine elektronische Steuereinheit (6) gelesen werden kann und auf dem ein Computerprogramm gespeichert ist, das Programmcodeanweisungen zur Umsetzung des Regelungsverfahrens nach einem der Ansprüche 1 bis 9 beinhaltet.

12. Lenksystem (3), **dadurch gekennzeichnet, dass** es Hardware (5, 8) und/oder Software beinhaltet, die das Regelungsverfahren nach einem der Ansprüche 1 bis 9 umsetzen.

13. Kraftfahrzeug (1), **dadurch gekennzeichnet, dass** es ein Lenksystem nach dem vorhergehenden Anspruch beinhaltet.

14. Verfahren zum Kalibrieren eines Fahrzeugs (1) nach dem vorhergehenden Anspruch, **dadurch gekennzeichnet, dass** es Folgendes beinhaltet:

- einen ersten Schritt (C11) des Messens einer seitlichen Referenzabweichung (yref) des Fahrzeugs (1) mit Bezug auf eine Referenzbahn (12), wenn das Fahrzeug (1) eine erste Strecke zurücklegt, wobei die Sichtweite (L) als gleich Null definiert ist,
- einen zweiten Schritt (C12) des allmählichen Erhöhens der Sichtweite (L) und des Verringerns des Verstärkungsfaktors (G), solange die seitliche Abweichung (y) des Fahrzeugs mit Bezug auf die Referenzbahn (12) im Wesentlichen gleich der seitlichen Referenzabweichung (yref) ist, wenn das Fahrzeug die erste Strecke zurücklegt,

und/oder **dadurch gekennzeichnet, dass** es Folgendes beinhaltet:

- einen ersten Schritt (C21) des Definierens der Sichtweite (L) als gleich einer vordefinierten Entfernung (Lmax),
- einen zweiten Schritt (C22) des allmählichen Erhöhens des Verstärkungsfaktors (G), bis die seitliche Abweichung (y) des Fahrzeugs mit Bezug auf eine Referenzbahn (12) kleiner als oder gleich einem Schwellenwert ist, wenn das Fahrzeug eine zweite Strecke zurücklegt.

## Claims

1. Method for controlling the lateral position of a motor vehicle (1), comprising:

- a step (E41) of calculating a sighting distance (L) of a detection means (8) embedded in the vehicle (1),
- a step (E5) of calculating a first component (FFD) of a steering angle setpoint ($\delta c$) of guiding wheels (2f) of the vehicle (1), the first component (FFD) being an open loop component of a control system, the first component (FFD) being weighted by a gain (G), said gain (G) being a decreasing function of the sighting distance (L),
- a step (E6) of calculating a second component (FBK) of said steering angle setpoint ($\delta c$), the second component (FBK) being a closed loop component of the control system.

2. Control method according to the preceding claim, **characterized in that** said gain (G) lies between 0 and 1 inclusive.

3. Control method according to one of the preceding claims, **characterized in that** said gain (G) is a decreasing linear function of the sighting distance (L), and/or **characterized in that** said gain (G) is equal to 1 when the sighting distance is zero.

4. Control method according to one of the preceding claims, **characterized in that** it comprises a step (E7) of calculating the steering angle setpoint ($\delta c$), the steering angle setpoint ($\delta c$) being equal to the sum of the open loop component (FFD) and of the closed loop component (FBK).

5. Control method according to one of the preceding claims, **characterized in that** the step (E6) of calculating the second component (FDK) comprises a substep (E61) of calculating a state vector (Xhyb) of the vehicle (1), the state vector (Xhyb) comprising a component equal to a lateral deviation (yL) of the vehicle (1) with respect to a reference path (12) at the sighting distance (L).

6. Control method according to the preceding claim, **characterized in that** the step (E6) of calculating the second component (FBK) of said steering angle setpoint ($\delta c$) comprises a substep of multiplying the lateral deviation (yL) of the vehicle (1) at the sighting distance (L) by the sighting distance (L).

7. Control method according to one of the preceding claims, **characterized in that** it comprises:

- a step (E2) of calculating a future lateral acceleration of the vehicle (1),
- a step (E3) of comparing the lateral acceleration to a threshold (S1), then,

if the lateral acceleration is greater than or equal to the threshold (S1), a step (E5) of calculating the first component (FFD) of said steering angle setpoint ($\delta$c), the first component (FFD) being weighted by a gain (G) equal to a predefined value ($\gamma$), independent of the sighting distance (L), and

if the lateral acceleration is strictly less than the threshold (S1), a step of calculating the first component (FFD) of said steering angle setpoint ($\delta$c), the first component being weighted by a gain (G), said gain (G) being a decreasing function of the sighting distance (L).

8. Control method according to the preceding claim, **characterized in that** the step (E2) of calculating a future lateral acceleration of the vehicle comprises a substep of acquiring a curvature of a traffic lane via a navigation system.

9. Control method according to one of the preceding claims, **characterized in that** the step (E41) of calculating the sighting distance (L) comprises a selection of a minimum value between a predefined distance (Lmax) and a viewing range (Lrange) of the detection means (8) of the vehicle (1).

10. Computer program product comprising program code instructions stored on a medium that can be read by an electronic control unit (6) for implementing the steps of the control method according to any one of Claims 1 to 9 when said program runs on an electronic control unit (6).

11. Data storage medium, that can be read by an electronic control unit (6), on which is stored a computer program comprising program code instructions for implementing the control method according to one of Claims 1 to 9.

12. Steering system (3), **characterized in that** it comprises hardware means (5, 8) and/or software means implementing the control method according to one of Claims 1 to 9.

13. Motor vehicle (1), **characterized in that** it comprises a steering system according to the preceding claim.

14. Method for calibrating a vehicle (1) according to the preceding claim, **characterized in that** it comprises:

- a first step (C11) of measuring a reference lateral deviation (yref) of the vehicle (1) with respect to a reference path (12) when the vehicle (1) makes a first journey, the sighting distance (L) being defined as equal to zero,
- a second step (C12) of gradually increasing the sighting distance (L) and of reducing the gain (G) as long as the lateral deviation (y) of the vehicle with respect to the reference path (12) is substantially equal to the reference lateral deviation (yref) when the vehicle makes the first journey,

and/or **characterized in that** it comprises:

a first step (C21) of defining the sighting distance (L) as equal to a predefined distance (Lmax),
a second step (C22) of gradually increasing the gain (G) until the lateral deviation (y) of the vehicle with respect to a reference path (12) is less than or equal to a threshold, when the vehicle makes a second journey.

Fig. 1

Fig. 2

Fig. 3

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- A Comparative Study of Vision-Based Lateral Control Stratégies for Autonomous Highway Driving. *Lane Keeping of Vehicle Using Model Prédictive Control, https:// www.cis.upenn.edu/~cjtaylor/PUBLICA-TIONS/pdfs/TaylorIJRR99.pdf*